# EUROPÄISCHE PATENTSCHRIFT

(11) **EP 2 052 455 B1**
(45) Veröffentlichungstag und Bekanntmachung des Hinweises auf die Patenterteilung: **13.06.2012**
(21) Anmeldenummer: 07788077.1
(22) Anmeldetag: 31.07.2007
(51) Int. Cl.: H02K 23/30

(54) **ELEKTRISCHE MASCHINE MIT EINZELZAHN-LÄUFERWICKLUNG**
ELECTRICAL MACHINE WITH SINGLE-TOOTH ROTOR WINDING
MACHINE ELECTRIQUE AVEC ENROULEMENT ROTORIQUE A DENTS RAPPORTEES

(30) Priorität: 07.08.2006 DE 102006036835
(43) Veröffentlichungstag der Anmeldung: 29.04.2009
(73) Patentinhaber: Robert Bosch GmbH, 70442 Stuttgart (DE)
(72) Erfinder: ROOS, Gerald, 77855 Sasbachried (DE)
(86) Internationale Anmeldenummer: PCT/EP2007/057881
(87) Internationale Veröffentlichungsnummer: WO 2008/017618

(56) Entgegenhaltungen:
- WO-A-02/21665
- DE-A1-102004 062 813
- CROS J ET AL: "Brush DC motors with concentrated windings and soft magnetic composites armatures" CONFERENCE RECORD OF THE 2001 IEEE INDUSTRY APPLICATIONS CONFERENCE. 36TH IAS ANNUAL MEETING . CHICAGO, IL, SEPT. 30 - OCT. 4, 2001, CONFERENCE RECORD OF THE IEEE INDUSTRY APPLICATIONS CONFERENCE. IAS ANNUAL MEETING, NEW YORK, NY : IEEE, US, Bd. VOL. 1 OF 4. CONF. 36, 30. September 2001 (2001-09-30), Seiten 2549-2556, XP010562040 ISBN: 0-7803-7114-3

## Beschreibung

### Stand der Technik

Die Erfindung betrifft eine elektrische Maschine, vorzugsweise einen Gleichstrommotor nach der Gattung des Anspruchs 1.

Für Gleichstrommotoren mit großen Drehmomenten und kleinen Drehzahlen ist es günstig, hohe Polzahlen zu wählen. Zusätzlich ermöglich der Einsatz einer Einzelzahlwicklung eine hohe Leistungs- beziehungsweise Drehmomentdichte. Um kleine Momentenwelligkeiten zu erreichen, ist die Anzahl der Zähne möglichst so zu wählen, dass das kleinste gemeinsame Vielfache (KGV) aus Polzahl und Zähnezahl möglichst groß ist, damit viele verschiedene magnetische Abrissstellungen zwischen den Zähnen und Polen pro Umdrehung entstehen. So ergibt sich beispielsweise für eine elektrische Gleichstrommaschine mit einem achtpoligen Stator und einem Kommutatorläufer mit elf Zähnen ein KGV von 88. Um dabei für die elektrische Maschine den Bauraum und den Fertigungsaufwand klein zu halten, ist die Anzahl der Kommutatorlamellen möglichst klein zu wählen.

Aus der WO02/21665 A2 ist es bekannt, für die Anzahl der Kommutatorlamellen ein Vielfaches der Polzahl zu verwenden. Außerdem ist es dort bekannt, zur Reduzierung der Bürstenzahl auf beispielsweise zwei Kohlebürsten, Kommutatorlamellen in vorgegebenen Abständen durch Kontaktbrücken miteinander zu verbinden. Derartige bekannte Lösungen haben dennoch den Nachteil einer relativ großen Anzahl von Kommutatorlamellen mit entsprechend großem Bauraum und Fertigungsaufwand.

Sofern die Anzahl der Kommutatorlamellen ein Vielfaches der Polpaarzahl und Nutenzahl ist, werden die gleichen Ordnungen der durch magnetische Reluktanz und elektrischer Kommutierung verursachten Kraft- und Drehmomentschwankungen angeregt. Dies führt insbesondere zu erhöhter Geräuschabstrahlung.

### Offenbarung der Erfindung

Mit der vorliegenden Lösung wird angestrebt, bei möglichst kleiner Drehmomentwelligkeit der elektrischen Maschine die Anzahl der Kommutatorlamellen über das bekannte Maß hinaus zu reduzieren.

Bei elektrischen Maschinen mit den kennzeichnenden Merkmalen des Anspruchs 1 wird so in vorteilhafter Weise durch eine sinnvolle Kombination von Polzahl, Zähnezahl und Lamellenzahl eine maximale Welligkeitsreduzierung erzielt. Ein weiterer Vorteil besteht darin, dass auf diese Weise durch einen kompakt bauenden Kommutator der Bauraum und der Fertigungsaufwand für die Maschine klein gehalten werden kann. Außerdem erzielt man damit eine reduzierte Geräuschabstrahlung.

Durch die in den Unteransprüchen aufgeführten Maßnahmen ergeben sich vorteilhafte Ausgestaltungen und Weiterbildungen der im Hauptanspruch angegebenen Merkmale.

So ergibt sich eine bessere Kommutierung der Spulen dadurch, dass der Kommutator zwei Plussowie zwei Minusbürsten aufweist, die jeweils um eine halbe Lamellenbreite mehr als ein Vielfaches der ganzen Lamellenbreite zueinander versetzt sind. Dadurch wird sichergestellt, dass eine Stromkommutierung unter den beiden Plusbürsten beziehungsweise Minusbürsten immer im Gegentakt erfolgt, was bei den bekannten Lösungen mit einem Bürstenversatz um ein ganzes Vielfaches der Lamellenbreite nicht der Fall ist.

Dabei ergeben sich abhängig von der Lamellenzahl unterschiedliche Lösungen. So sind in vorteilhafter Weise bei einer geraden Lamellenzahl des Kommutators die zwei Plusbürsten sowie die zwei Minusbürsten jeweils um eine doppelte Polteilung der Erregerspule zueinander versetzt und bei ungerader Lamellenzahl sind die zwei Plusbürsten sowie die zwei Minusbürsten des Kommutators um 180° zueinander versetzt. Des Weiteren wird eine optimale Stromkommutierung bei der elektrischen Maschine dadurch erreicht, dass eine der Minusbürsten zu einer der Plusbürsten um die dreifache Polteilung (in Drehrichtung der Maschine) versetzt ist. Eine weitere Kommutierungsoptimierung erfolgt dadurch, dass die um jeweils vier Polteilungen zueinander versetzten Lamellen des Kommutators über die Kontaktbrücken miteinander verbunden sind.

Eine besonders komfortable Herstellung der Spulen und Kontaktbrücken mittels Wickelautomaten wird dadurch erreicht, dass die Spulen der Polzähne und die Kontaktbrücken des Kommutators von einem Wickeldraht durchgewickelt sind. Derartige elektrische Maschinen sind bevorzugt in vielfältiger Anwendung in Kraftfahrzeugen einsetzbar. Als bevorzugte Ausführungsform für einen Wischerdirektantrieb wird hier unter anderem eine elektrische Maschine mit einem Kommutatorläufer aus acht Polzähnen beziehungsweise -nuten sowie 22 Lamellen und einem achtpoligen Stator vorgeschlagen.

### Kurze Beschreibung der Zeichnungen

Die Erfindung wird im Folgenden beispielhaft anhand der Figuren näher erläutert. Es zeigen:
- Figur 1: eine schematische Darstellung der erfindungsgemäßen elektrischen Maschine in der Vorderansicht als erstes Ausführungsbeispiel.
- Figur 2: eine Wickeltabelle für die mit Wickelautomaten herzustellenden Spulen und Kontaktbrücken der Maschine,
- Figur 3a: zeigt eine Abwicklung der Maschine aus Figur 1 in schematischer Darstellung mit den ersten drei Spulen und Kontaktbrücken des Kommutatorläufers,
- Figur 3b, 3c und 3d: zeigen weitere schematische Darstellungen zur Herstellung der Läuferwicklung nach der Wickeltabelle gemäß Figur 2 für die Spulen und Kontaktbrücken 4 bis 6, 7 bis 9 und 10 bis 11.
- Figur 4: zeigt als weiteres Ausführungsbeispiel eine achtpolige Maschine mit 9 Zähnen und 18 Lamellen in schematischer Darstellung,
- Figur 5: zeigt dazu eine Wickeltabelle und
- Figur 6: zeigt die Abwicklung der Maschine aus Figur 4 in schematischer Darstellung mit den beiden ersten Spulen und Kontaktbrücken gemäß der Wickeltabelle nach Figur 5.
- Figur 7: zeigt in einem dritten Ausführungsbeispiel eine zwölfpolige elektrische Maschine mit 11 Zähnen und 33 Lamellen in schematischer Darstellung und
- Figur 8: die dazugehörige Wickeltabelle sowie
- Figur 9: die entsprechende Abwicklung der Maschine aus Figur 7 mit den ersten drei nach der Wickeltabelle gemäß Figur 8 hergestellten Spulen und 6 Kontaktbrücken.

### Ausführungsformen der Erfindung

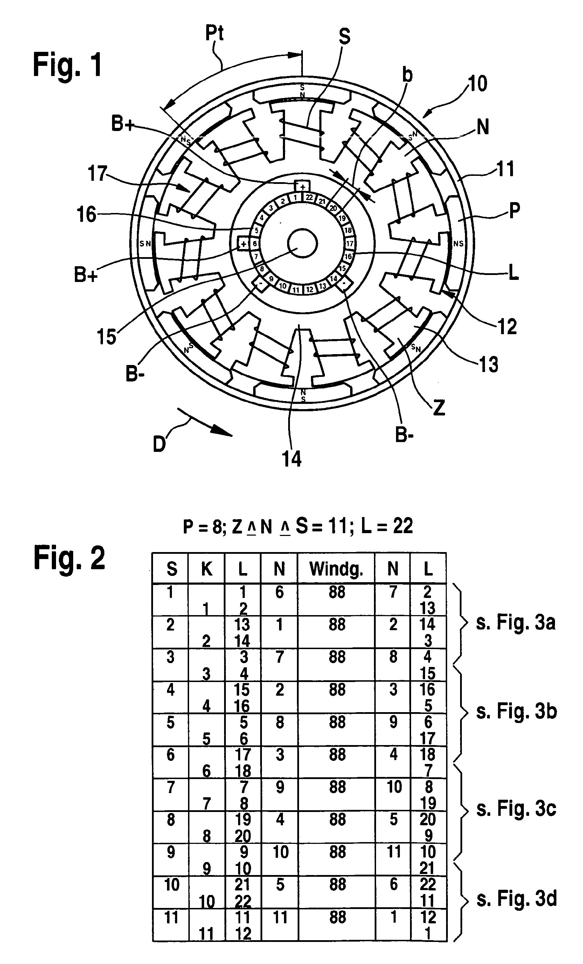

In Figur 1 ist für ein erstes Ausführungsbeispiel ein permanent magnetisch erregter achtpoliger Gleichstrommotor als elektrische Maschine in der Vorderansicht schematisch dargestellt und mit 10 bezeichnet. Derartige Maschinen werden bevorzugt für Stellantriebe, Gebläse, Scheibenwischer und dergleichen in Kraftfahrzeuge eingesetzt und müssen bei hohen Belastungen möglichst über die ganze Lebensdauer des Fahrzeugs zuverlässig arbeiten. Weitere Anforderungen sind möglichst geringe Kraft- und Drehmomentschwankungen sowie eine geringe Geräuschabstrahlung. Der Gleichstrommotor 10 hat einen achtpoligen Stator 11, der über einen Arbeitsluftspalt 12 mit einem Kommutatorläufer 13, nachfolgend Läufer genannt, zusammenwirkt. Der Läufer 13 besteht aus einem Blechpaket 14, das auf einer beidseitig gelagerten Läuferwelle 15 befestigt ist. Am Umfang des Blechpaketes 14 sind 11 gleichmäßig verteilte Polzähne Z angeordnet, zwischen denen jeweils Nuten N zur Aufnahme von insgesamt 11 Spulen S einer Läuferwicklung 17 ausgebildet sind. Die Spulen S sind dabei als Einzelzahnspulen auf je einen Polzahn Z durch Wickelautomaten hergestellt. Sie werden dabei in besonderer Weise mit einem an der vorderen Stirnseite des Blechpaketes 14 auf die Läuferwelle 15 aufgesetzten Kommutator 16 verschaltet. Der Kommutator hat 22 über den Umfang gleichmäßig verteilt angeordnete Lamellen L, die mit je zwei ortsfesten Plus-Kohlebürsten B+ und Minus-Kohlebürsten B- zusammenwirken. Sie sind um jeweils 90° zueinander versetzt und werden zum Betrieb der elektrischen Maschine mit Gleichstrom versorgt. Die 11 Polzähne Z des Läufers 13 wirken dabei mit 8 Erregerpolen des Stators 11 zusammen. Um eine möglichst geringe Drehmomentenwelligkeit der elektrischen Maschine zu erzielen, weicht die Anzahl der Polzähne von der Anzahl der Erregerpole ab. Außerdem beträgt hier die Anzahl der Lamellen L das Zweifache der Polzahnzahl.

Für eine optimale magnetische Reluktanz und elektrische Kommutierung der Maschine ist es ferner erforderlich, dass die Anzahl der Kommutatorlamellen L ein Vielfaches der halben Polpaarzahl der Erregerpole P, jedoch kein Vielfaches der Polpaarzahl selbst ist. Ferner muss die Polpaarzahl eine gerade Zahl sein. Diese Bedingungen treffen für den Gleichstrommotor 10 nach Figur 1 mit einer Polpaarzahl p=4 und einer Lamellenzahl von 22 zu. Die Kommutierung der Maschine wird außerdem dadurch optimiert, das die zwei Plusbürsten B+ sowie die zwei Minusbürsten B- um eine halbe Lamellenbreite mehr als eine Vielfaches der ganzen Lamellenbreite b zueinander versetzt sind. Damit ist sichergestellt, dass immer dann, wenn eine der Plusbürsten beziehungsweise Minusbürsten mitten auf einer Lamelle L steht, die jeweils andere Plusbürste beziehungsweise Minusbürste jeweils zwei benachbarten Lamellen L überbrückt. Für eine optimale magnetische Reluktanz ist es ferner bei einer graden Lamellenzahl des Kommutators 16 erforderlich, dass die zwei Plusbürsten B+ sowie die zwei Minusbürsten B- jeweils um eine doppelte Polteilung Pt der Erregerpole P zueinander versetzt sind. Dies ergibt bei einem achtpoligen Gleichstrommotor 10 nach Figur 1 einen Bürstenversatz von jeweils 90°. Außerdem ist es zur Erzielung einer optimalen Kommutierung erforderlich, dass eine der Minusbürsten B- zu einer der Plusbürsten B+ um die dreifache Polteilung Pt in Drehrichtung des Pfeiles D der Maschine versetzt ist.

Figur 2 zeigt eine Wickeltabelle, mit der die 11 Spulen des Gleichstrommotors 10 hergestellt und mit den 22 Lamellen L des Kommutators 16 sowie mit 11 Kontaktbrücken K verschaltet werden. Die Wickeltabelle wird dabei von einem Wickelautomaten abgearbeitet, in dem jeweils abwechselnd die Spulen S der Polzähne Z und die Kontaktbrücken K von einem Wickeldraht durchgewickelt werden.

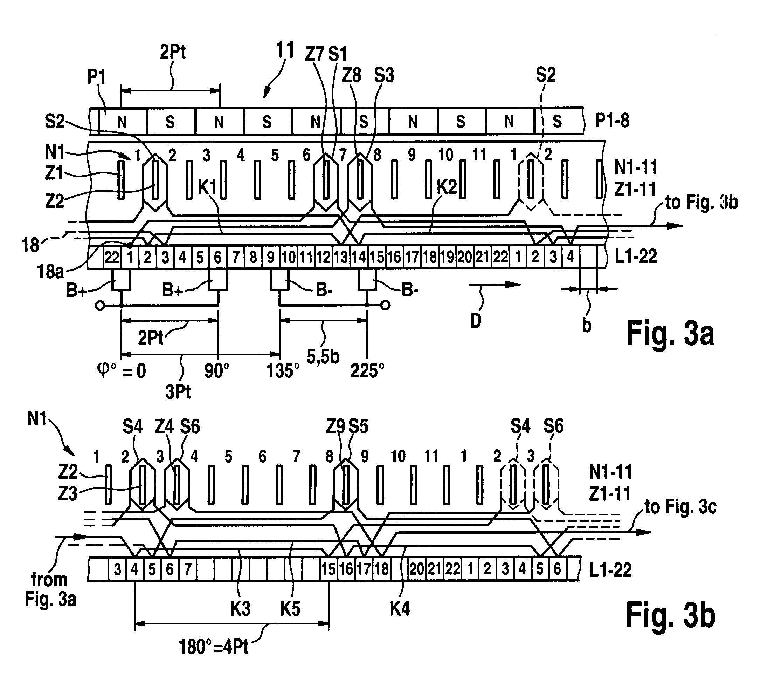

Die Figuren 3a bis 3d zeigen in schematischer Darstellung Abwicklungen des Gleichstrommotors 10 aus Figur 1, mit denen die Herstellung der Spulen S und der Kontaktbrücken K nach der Wickeltabelle aus Figur 2 in vier Abschnitten dargestellt und weiter unten beschrieben wird. Erkennbar ist dort der achtpolige Stator 11 mit den Polen P1 bis 8, die elf Polzähne Z1 bis 11, die Nuten N 1 his 11 und der Kommutator 16 mit den Lamellen L1 bis 22,

Figur 3a zeigt einen ersten Abschnitt zur Herstellung der Läuferwicklung 17 mit den Spulen S 1 bis S3 und den Kontaktbrücken K1 bis K3. Der Wickelanfang 18a ist frei wählbar und wird hier der Lamelle L1 zugeordnet. Ferner wird die ebenfalls frei wählbare Zuordnung der Kommutatorlamellen L zu den Polzähnen Z hier so gewählt, dass der erste Polzahn Z 1 genau in Höhe des Lamellenschlitzes zwischen den Lamellen L 1 und L22 des Kommutators 16 liegt. Diese Position soll nunmehr gemäß Figur 3a am Umfang die Winkellage von ϕ =0° haben. In dieser Position steht außerdem der erste Nordpol P1 des Stators 11 mitten über den Polzahn Z1. Während die erste Plusbürste B+ die Lamellen L22 und L 1 überbrückt, ist die zweite Plusbürste B+ um eine doppelte Polteilung 2Pt, das heißt um 90° dazu in Drehrichtung D versetzt und steht mitten auf der Lamelle L6. Die erste Minusbürste B- ist gegenüber der ersten Plusbürste B+ um die dreifache Polteilung 3Pt, entsprechend einem Winkel von 135° in Drehrichtung D versetzt angeordnet und steht auf der Lamelle L9. Die zweite Minusbürste B- ist dazu wiederum um 90° versetzt und steht auf den Lamellen L 14 und L 15. Der Bürstenversatz der Plusbürsten sowie der Minusbürsten beträgt damit jeweils die fünfeinhalbfache Lamellenbreite (5,5b).

Der Wickelautomat arbeitet die Wickeltabelle nach Figur 2 zeilenweise ab, wobei die Spulen S1 bis 11 und die Kontaktbrücken K1 bis 11 nacheinander durchgewickelt und jeweils mit den ihnen zugeordneten Lamellen L des Kommutators 16 kontaktiert werden.

Zur besseren Übersicht sind in Figur 3a bis 3d die Nuten N sowie die Lamellen L durchnummeriert. Die in den Abwicklungen doppelt dargestellten Spulen sind jeweils auf der rechten Seite der Figuren 3a bis 3d gestrichelt dargestellt.

Dabei wird im Einzelnen wie folgt vorgegangen:
Gemäß Figur 3a wird beginnend mit der Spule S1 der Wickeldraht 18 zunächst an der Lamelle L1 befestigt, dann der Anfang der Spule S 1 durch die Nut N6 gelegt, sodann werden 88 Windungen um den Polzahn Z7 gewickelt, um dann das Spulenende durch die Nut N7 an der Lamelle L 2 zu befestigen. Anschließend wird ohne Unterbrechung des Wickeldrahtes die erste Kontaktbrücke K 1 von Lamelle L2 zur Lamelle L13 gelegt. Von dort wird der Anfang der Spule S2 durch die Nut N1 gelegt, die Spule mit 88 Windungen um den Zahn Z2 gewickelt und das Ende durch die Nut N2 zur Lamelle L 14 geführt. Anschließend wird von dort die Kontaktbrücke K2 zur Lamelle L3 gelegt. Von dort wird nun der Anfang der Spule S3 durch die Nut N7 gelegt, die Spule um den Zahn Z8 gewickelt und das Ende durch die Nut N8 zur Lamelle L4 gelegt. Von dort wird der Wickeldraht auf Figur 3b übergeführt.

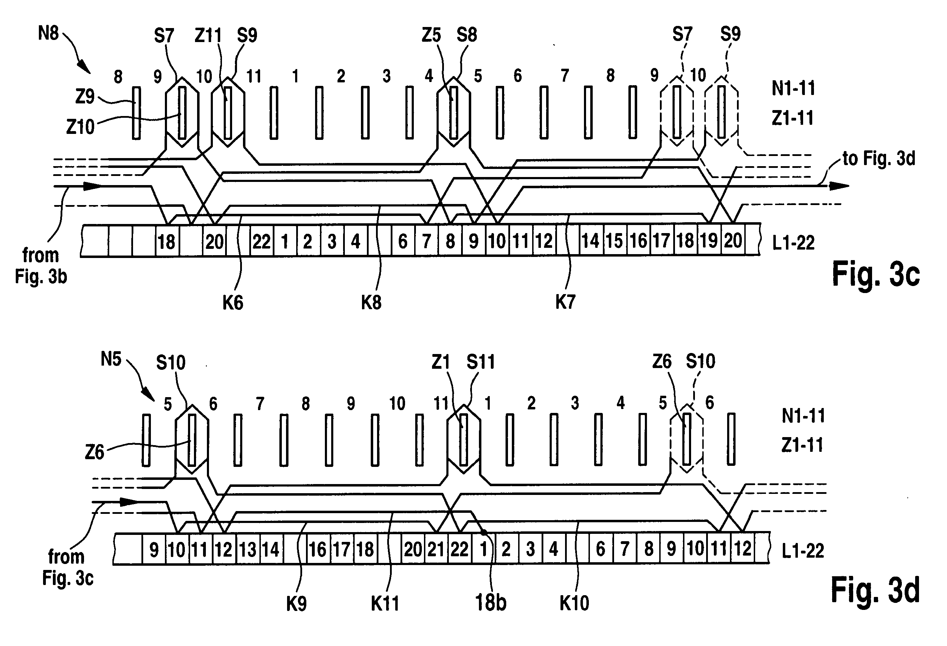

Gemäß Figur 3b folgt nun die Kontaktbrücke K3 von Lamelle L4 zur Lamelle L15. Dabei ist erkennbar, dass die Kontaktbrücken K jeweils die um 180° zueinander versetzten Lamellen L des Kommutators 16 miteinander verbinden, das entspricht hier einer vierfachen Polteilung 4Pt. Anschließend wird der Anfang der Spule S4 von Lamelle L 15 durch die Nut N2 gelegt, die Spule mit 88 Windungen um den Zahn Z3 gewickelt und das Ende durch die Nut N3 auf die Lamelle L16 gelegt. Nun folgt die Kontaktbrücke K4 von Lamelle L16 auf Lamelle L5. Von dort wird der Anfang der Spule S5 durch die Nut N8 gelegt, die Spule auf den Polzahn Z9 gewickelt und das Spulenende durch die Nut N9 auf Lamelle L6 gelegt. Nun folgt die Kontaktbrücke K5 von Lamelle L6 auf Lamelle L 17. Anschließend wird die Spule S6 mit ihrem Anfang von Lamelle L 17 durch die Nut N3 gelegt, auf den Polzahn Z4 gewickelt und das Ende durch die Nut N4 zur Lamelle L 18 gelegt. Von dort wird der Wickeldraht 18 auf Figur 3c überführt.

Gemäß Figur 3c folgt nun die Kontaktbrücke K6 von Lamelle L18 zur Lamelle L7. Anschließend wird der Anfang der Spule S7 von Lamelle L7 durch die Nut N9 gelegt, die Spule um den Zahn Z10 gewickelt und das Ende durch die Nut N10 auf die Lamelle L8 gelegt. Dann folgt die Kontaktbrücke K7 von Lamelle L8 auf Lamelle L19. Von dort wird dann der Anfang der Spule S8 durch die Nut N4 gelegt, die Spule um den Zahn Z5 gewickelt und das Ede durch die Nut N5 auf Lamelle L20 gelegt. Dann folgt die Kontaktbrücke K8 von Lamelle L20 auf Lamelle L9. Von dort wird der Anfang der Spule S9 durch die Nut N10 gelegt, die Spule mit 88 Windungen auf den Polzahn Z 11 gewickelt und das Spulenende durch die Nut N11 auf Lamelle L 10 gelegt. Von dort wird der Wickeldraht 18 auf Figur 3d überführt.

Gemäß Figur 3d folgt nun von Lamelle L 10 die Kontaktbrücke K9 auf Lamelle L21. Anschließend wird der Anfang der Spule S10 von Lamelle L21 durch die Nut N5 gelegt, die Spule mit 88 Windungen um den Zahn Z6 gewickelt und das Ende durch die Nut N6 auf die Lamelle L22 gelegt. Dann folgt die Kontaktbrücke K10 von Lamelle L22 auf Lamelle L11. Von dort wird der Anfang der Spule S 11 durch die Nut N11 gelegt, die Spule auf den Polzahn Z1 gewickelt und das Spulenende durch die Nut N 1 auf Lamelle L 12 gelegt. Zum Abschluss wird dann noch die Kontaktbrücke K11 von Lamelle L12 auf Lamelle L1 gelegt. Der Wickeldraht 18 wird hier schließlich abgetrennt und bildet das Ende 18b der Läuferwicklung 17.

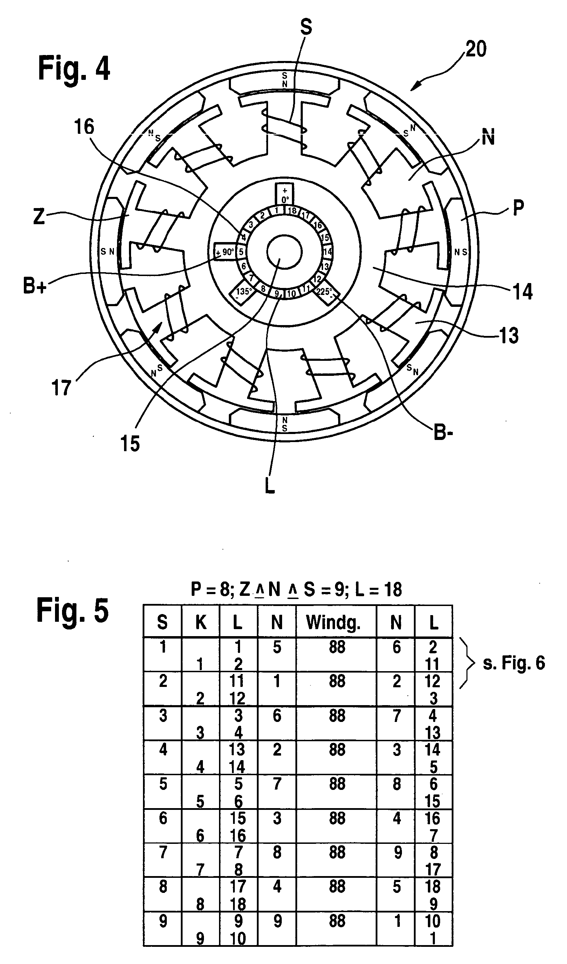

Figur 4 zeigt in einem zweiten Ausführungsbeispiel einen Gleichstrommotor 20, dessen Stator 11 wiederum acht Pole P aufweist. Der Kommutatorläufer 13 ist hier jedoch mit nur neun Nuten N beziehungsweise Polzähnen Z versehen, welche jeweils eine Spule S tragen. Der Kommutator 16 ist hier mit achtzehn Lamellen L versehen und wird über jeweils zwei Plusbürsten B+ und Minusbürsten B- mit Gleichstrom versorgt.

Figur 5 zeigt eine Wickeltabelle für die Läuferwicklung 17 des Gleichstrommotors 20 nach Figur 4.

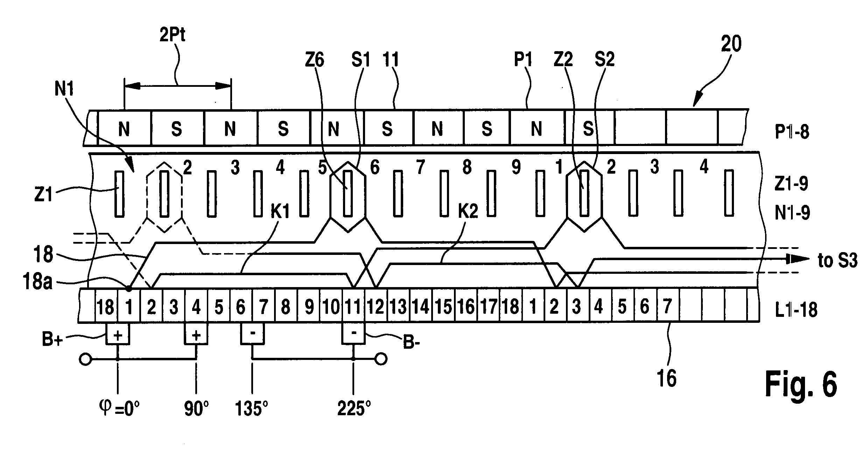

Figur 6 zeigt wiederum in schematischer Darstellung eine Abwicklung des Gleichstrommotors 20 aus Figur 4 mit der das Wickelverfahren zur Herstellung und Verschaltung der Spulen S und Kontaktbrücken K für die ersten vier Wickelabschnitte der Wickeltabelle aus Figur 5 im Folgenden näher erläutert wird. Dabei sind die zwei Plusbürsten B+ und Minusbürsten B- in gleicher Weise wie beim ersten Ausführungsbeispiel jeweils um 90° zueinander versetzt, was beim achtpoligen Stator 11 einer doppelten Polteilung 2Pt entspricht. Die erste Minusbürste B- ist auch hier gegenüber der ersten Plusbürste B+ um 135° beziehungsweise um drei Polteilungen versetzt.

Aus der Wickeltabelle nach Figur 5 ist erkennbar, dass die neun Spulen S und die Kontaktbrücken K im Wechsel durchgehend von einem Wickeldraht 18 herzustellen sind. Dabei wird im Einzelnen wie folgt vorgegangen:
Gemäß Figur 6 wird beginnend mit der Spule S 1 der Wickeldraht 18 zunächst mit dem Anfang 18a an der Lamelle L 1 befestigt, dann der Anfang der Spule S 1 durch die Nut N5 gelegt, sodann werden 88 Windungen um den Polzahn Z6 gewickelt, um dann das Spulenende durch die Nut N6 an der Lamelle L2 zu befestigen. Anschließend wird ohne Unterbrechung des Wickeldrahtes die erste Kontaktbrücke K1 von Lamelle L2 zur Lamelle L11 gelegt. Von dort wird der Anfang der Spule S2 durch die Nut N 1 gelegt, die Spule S2 um den Zahn Z2 gewickelt und das Ende durch die Nut N2 zur Lamelle L 12 geführt. Anschließend wird von dort die Kontaktbrücke K2 von Lamelle L12 zur Lamelle L3 gelegt. Von dort wird der Wickeldraht in der Abwicklung nach Figur 6 auf der rechten Seite herausgeführt zur Spule S3. Wie im ersten Ausführungsbeispiel zu den Figuren 3a bis 3d wird nunmehr auch im zweiten Ausführungsbeispiel die Wickeltabelle gemäß Figur 5 Schritt für Schritt abgearbeitet, bis schließlich mit der letzten Kontaktbrücke K10 der Wickeldraht wieder zur Lamelle L 1 gelangt und dort abgetrennt wird.

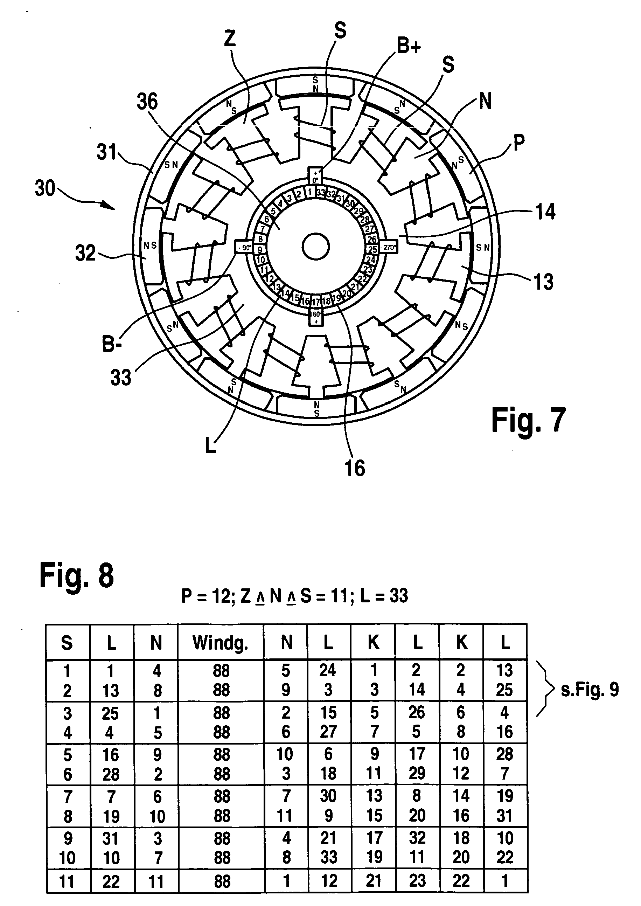

Figur 7 zeigt in einem dritten Ausführungsbeispiel einen Gleichstrommotor 30, dessen zwölfpoliger Stator 31 zwölf am Umfang gleichmäßig verteilte Permanentmagnete 32 aufweist. Sie bilden acht Pole mit abwechselnder Polarität, die mit einem Läufer 33 zusammenwirken, welcher elf Nuten N und Polzähne Z aufweist, auf denen jeweils eine Spule S aufgewickelt ist. Die elf Spulen S sind an einem Kommutator 36 angeschlossen, der an seinem Umfang dreiunddreißig Lamellen L aufweist. Zur Stromversorgung der elektrischen Maschine wirken die Kommutatorlamellen L mit zwei Plusbürsten B+ und 2 Minusbürsten B- zusammen. In Abweichung zu den zwei ersten Ausführungsbeispielen hat hier der Kommutator 36 eine ungerade Lamellenzahl. Dadurch ist es möglich, zur optimalen Kommutierung die zwei Plusbürsten B+ sowie die zwei Minusbürsten B- jeweils um 180° zueinander zu versetzen. Dabei sind die Minusbürsten B- zu den Plusbürsten B+ um jeweils 90° versetzt.

Figur 8 zeigt eine Wickeltabelle, mit der die elf Spulen S und 22 Kontaktbrücken K mit einem Wickelautomaten hergestellt werden können. Dabei werden abweichend von den vorherigen Ausführungsbeispielen nach jeder Spule zwei Kontaktbrücken K nacheinander hergestellt ehe dann die nächste Spule folgt. Auch hier können sämtliche Spulen S und Kontaktbrücken K mit einem Wickeldraht durchgewickelt werden.

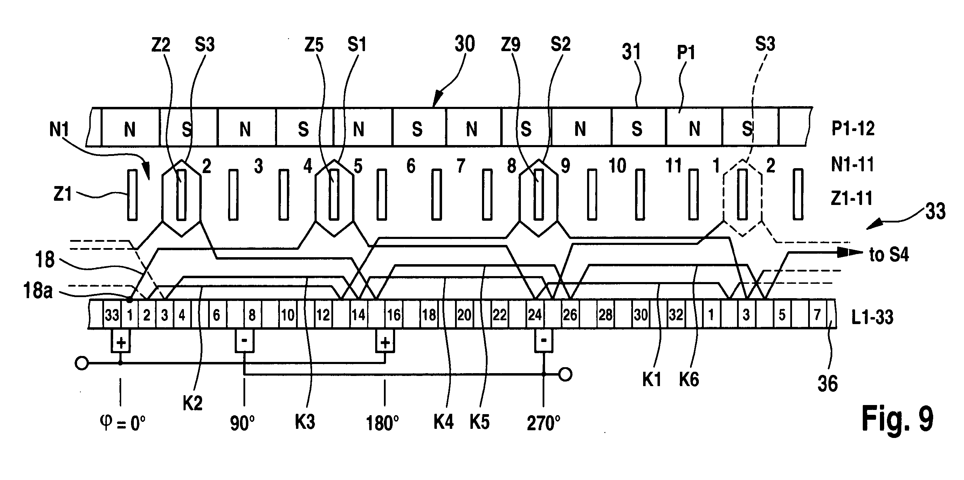

Figur 9 zeigt in einer Abwicklung des Gleichstrommotors 30 den zwölfpoligen Stator 31 mit dem Läufer 33 und dessen Kommutator 36. Mit Hilfe der Wickeltabelle aus Figur 8 wird im Folgenden die Herstellung und Anordnung der ersten drei Spulen S und der ersten sechs Kontaktbrücken K mit Figur 9 näher beschrieben. Dabei ergibt sich die nachstehende Schrittfolge:
Zunächst wird der Wickeldraht 18 an Lamelle L 1 im Punkt 18a befestigt, dann der Anfang der Spule S 1 durch die Nut N4 gelegt, sodann werden 88 Windungen um den Polzahn Z5 gewickelt, um dann das Spulenende durch die Nut N5 an der Lamelle L24 zu befestigen. Anschließend wird ohne Unterbrechung des Wickeldrahtes die erste Kontaktbrücke K1 von Lamelle L24 zur Lamelle L2 gelegt und von dort zugleich die zweite Kontaktbrücke K2 bis zur Lamelle L13 geführt. Von dort wird der Anfang der Spule S2 durch die Nut N8 gelegt, die Spule auf den Polzahn Z9 gewickelt und das Ende durch die Nut N9 zur Lamelle L3 geführt. Von dort wird nun die Kontaktbrücke K3 zur Lamelle L14 gelegt und des Weiteren die Kontaktbrücke K4 zur Lamelle L25 verlegt. Von dort wird dann der Anfang der Spule S3 durch die Nut N 1 gelegt, die Spule um den Polzahn Z2 gewickelt und das Ende durch die Nut N2 zur Lamelle L15 gelegt. Danach folgt die Kontaktbrücke K5 zur Lamelle L26 und sodann die Kontaktbrücke K6 bis zur Lamelle L4. Von Lamelle L4 wird der Wickeldraht auf der rechten Seite der Abwicklung in Figur 9 zur Spule S4 geführt, wobei dieser Wickelschritt sowie alle weiteren aus der Tabelle nach Figur 8 zu entnehmenden Wickelschritte in gleicher Weise wie im ersten Ausführungsbeispiel erläutert von einem Wickelautomaten abgearbeitet werden, bis schließlich nach der letzten Kontaktbrücke K22 der Wickeldraht wieder zur Lamelle L1 gelangt.

Bei elektrischen Maschinen, deren Lamellenzahl ein Vielfaches der Polzähnezahl ist, besteht der übergeordnete Lösungsgedanke zur Reduzierung von Welligkeiten der magnetischen Reduktanz und der elektrischen Kommutierung darin, dass die Anzahl der Kommutatorlamellen L in jedem Fall auch noch ein Vielfaches der halben Polpaarzahl der Erregerpole jedoch kein Vielfaches der ganzen Polpaarzahl p ist, wobei die Polpaarzahl ferner eine gerade Zahl sein muss. Dieser Lösungsgedanke ist daher nicht auf die dargestellten Ausführungsbeispiele beschränkt. So ergeben sich allein bei einer achtpoligen elektrischen Maschine für deren Läufer weitere Alternativen, zum Beispiel mit dreizehn Nuten/Polzähnen und sechsundzwanzig Kommutatorlamellen beziehungsweise mit fünfzehn Nuten/Polzähnen und dreißig Kommutatorlamellen. Entsprechend viele Alternativen erhält man auch bei vierpoligen, zwölfpoligen und sechzehnpoligen elektrischen Maschinen.

Ein weiteres übergeordnetes Merkmal der Ausführungsbeispiele besteht darin, dass der Kommutator zwei Plusbürsten B+ und zwei Minusbürsten B- aufweist, wobei die Plusbürsten sowie die Minusbürsten um eine halbe Lamellenbreite mehr als ein Vielfaches der ganzen Lamellenbreite b zueinander versetzt sind. Dadurch wird bei der Kommutierung der Maschine eine geringe Stromwelligkeit erzielt, indem nie gleichzeitig der Strom unter beiden Plusbürsten und Minusbürsten von einer Lamelle zu benachbarten Lamelle kommutiert wird. Damit wird ferner erreicht, dass die Frequenz der magnetischen Welligkeit (Polpaarzahl x Zähnezahl) von der Frequenz der Stromwelligkeit abweicht. Dies bedeutet geringere Kraft- und Drehmomentschwankungen sowie eine verringerte Geräuschabstrahlung.

## Patentansprüche

1. Elektrische Maschine, vorzugsweise Gleichstrommotor (10) mit mindestens acht Erregerpolen (P) im Stator (11) und mit einem Kommutatorläufer (13), der eine Anzahl von Nuten (N) und Polizähnen (Z) am Umfang aufweist, die von der Anzahl der Erregerpole abweicht und deren Polzähne jeweils mindestens eine Spule (S) tragen, deren Enden mit Kommutatorlamellen (L) verbunden sind, die paarweise über Kontaktbrücken (K) elektrisch miteinander in Verbindung stehen sowie über Kohlebürsten (B) mit elektrischer Energie zu versorgen sind, wobei die Anzahl der Kommutatorlamellen ein Vielfaches der Anzahl der Polzähne ist, **dadurch gekennzeichnet, dass** die Anzahl der Kommutatorlamellen (L) ferner ein Vielfaches der halben Polpaarzahl (p) der Erregerpole (P) jedoch kein Vielfaches der Polpaarzahl (p) ist, wobei die Polpaarzahl (p) eine gerade Zahl sein muss.

2. Elektrische Maschine nach Anspruch 1, **dadurch gekennzeichnet, dass** der Kommutator (16) zwei Plus- und zwei Minusbürsten (B+, B-) aufweist, wobei die zwei Plusbürsten (B+) sowie die zwei Minusbürsten (B-) um eine halbe Lamellenbreite (b) mehr als ein Vielfaches der ganzen Lamellenbreite (b) zueinander versetzt sind.

3. Elektrische Maschine nach Anspruch 1 oder 2, **dadurch gekennzeichnet, dass** die zwei Plusbürsten (B+) sowie die zwei Minusbürsten (B-) bei gerader Lamellenzahl (L) des Kommutators (16) jeweils um eine doppelte Polteilung (Pt) der Erregerpole (P) zueinander versetzt sind.

4. Elektrische Maschine nach Anspruch 1 oder 2, **dadurch gekennzeichnet, dass** die zwei Plusbürsten (B+) sowie die zwei Minusbürsten (B-) bei ungerader Lamellenzahl (L) des Kommutators (36) um 180° zueinander versetzt sind.

5. Elektrische Maschine nach Anspruch 2 oder 4, **dadurch gekennzeichnet, dass** eine der Minusbürsten (B-) zu einer der Plusbürsten (B+) um die dreifache Polteilung (Pt) der Maschine versetzt ist.

6. Elektrische Maschine nach einem der vorherigen Ansprüche, **dadurch gekennzeichnet, dass** die um jeweils vier Polteilungen (Pt) zueinander versetzten Lamellen (L) des Kommutators (16) über die Kontaktbrücken (K) miteinander verbunden sind.

7. Elektrische Maschine nach Anspruch 1 oder 6, **dadurch gekennzeichnet, dass** die Spulen (S) der Polzähne (Z) und die Kontaktbrücken (K) von einem Wickeldraht (18) mittels Wickelautomaten durchgewickelt sind.

8. Elektrische Maschine nach Anspruch 1, **dadurch gekennzeichnet, dass** bei einem achtpoligen Stator (11) der Kommutatorläufer (13) mit elf Polzähnen (Z) beziehungsweise Nuten (N) sowie mit zweiundzwanzig Lamellen (L) versehen ist.

9. Elektrische Maschine nach Anspruch 1, **dadurch gekennzeichnet, dass** bei einem achtpoligen Stator (11) der Kommutatorläufer (13) mit neun Polzähnen (Z) beziehungsweise Nuten (N) sowie mit achtzehn Lamellen (L) versehen ist

10. Elektrische Maschine nach Anspruch 1, **dadurch gekennzeichnet, dass** bei einem zwölfpoligen Stator (31) der Kommutatorläufer (33) mit elf Polzähnen (Z) beziehungsweise Nuten (N) sowie mit dreiunddreißig Lamellen (L) versehen ist

## Claims

1. Electrical machine, preferably a DC motor (10), having at least eight exciter poles (P) in the stator (11) and having a commutator rotor (13) which has a number of slots (N) and pole teeth (Z) over the circumference, this number differing from the number of exciter poles and the pole teeth thereof in each case having at least one coil (S), the ends of the said coil being connected to commutator laminations (L) which are electrically connected to one another in pairs by means of contact bridges (K) and which can be supplied with electrical energy by means of carbon brushes (B), with the number of commutator laminations being a multiple of the number of pole teeth, **characterized in that** the number of commutator laminations (L) is also a multiple of half the number (p) of pairs of exciter poles (P) but not a multiple of the number (p) of pairs of poles, with the number (p) of pairs of poles having to be an even number.

2. Electrical machine according to Claim 1, **characterized in that** the commutator (16) has two positive and two negative brushes (B+, B-), with the two positive brushes (B+) and the two negative brushes (B-) being offset in relation to one another by half a lamination width (b) more than a multiple of the total lamination width (b).

3. Electrical machine according to Claim 1 or 2, **characterized in that** the two positive brushes (B+) and the two negative brushes (B-) are offset in relation to one another in each case by twice the pole pitch (Pt) of the exciter poles (P) when there is an even number (L) of laminations in the commutator (16).

4. Electrical machine according to Claim 1 or 2, **characterized in that** the two positive brushes (B+) and the two negative brushes (B-) are offset in relation to one another by 180° when there is an odd number (L) of laminations in the commutator (36).

5. Electrical machine according to Claim 2 or 4, **characterized in that** one of the negative brushes (B-) is offset in relation to one of the positive brushes (B+) by three times the pole pitch (Pt) of the machine.

6. Electrical machine according to one of the preceding claims, **characterized in that** the laminations (L) of the commutator (16) which are offset in relation to one another by in each case four pole pitches (Pt) are connected to one another by means of the contact bridges (K) .

7. Electrical machine according to Claim 1 or 6, **characterized in that** the coils (S) of the pole teeth (Z) and the contact bridges (K) are wound-through by a winding wire (18) by means of winding machines.

8. Electrical machine according to Claim 1, **characterized in that**, in an eight-pole stator (11), the commutator rotor (13) is provided with eleven pole teeth (Z) and, respectively, slots (N) and with twenty-two laminations (L).

9. Electrical machine according to Claim 1, **characterized in that**, in an eight-pole stator (11), the commutator rotor (13) is provided with nine pole teeth (Z) and, respectively, slots (N) and with eighteen laminations (L).

10. Electrical machine according to Claim 1, **characterized in that**, in a twelve-pole stator (31), the commutator rotor (33) is provided with eleven pole teeth (Z) and, respectively, slots (N) and with thirty-three laminations (L).

## Revendications

1. Machine électrique, de préférence moteur (10) à courant continu présentant au moins huit pôles d'excitateur (P) dans le stator (11) et un induit de commutateur (13) doté à sa périphérie de plusieurs rainures (N) et de plusieurs dents polaires (7) dont le nombre diffère de celui des pôles d'excitateur et dont les dents polaires portent chacune au moins une bobine (S) dont les extrémités sont reliées à des lamelles (L) du commutateur reliées électriquement par paires par des ponts de contacts (K) et alimentée en énergie électrique par des balais de charbon (B), le nombre des lamelles de commutateur étant un multiple du nombre des dents polaires,
**caractérisée en ce que**
le nombre de lamelles du commutateur (L) est en outre un multiple de la moitié du nombre (p) des paires de pôles d'excitateur (P) mais n'est pas un multiple du nombre (p) des paires polaires, le nombre (p) des paires polaires devant être un nombre entier.

2. Machine électrique selon la revendication 1, **caractérisée en ce que** le commutateur (16) présente deux balais positifs et deux balais négatifs (B+, B-), les deux balais positifs (B+) ainsi que les deux balais négatifs (B-) étant décalés l'un par rapport à l'autre d'une demi-largeur (b) de lamelle de plus qu'un multiple du nombre entier (b) de lamelles.

3. Machine électrique selon la revendication 1 ou 2, **caractérisée en ce que** les deux balais positifs (B+) ainsi que les deux balais négatifs (B-) sont décalés l'un par rapport à l'autre du double de la division polaire (Pt) des pôles d'excitateur (P) lorsque le nombre (L) de lamelles du commutateur (16) est pair.

4. Machine électrique selon la revendication 1 ou 2, **caractérisée en ce que** les deux balais positifs (B+) ainsi que les deux balais négatifs (B-) sont décalés l'un par rapport à l'autre de 180° lorsque le nombre (L) des lamelles du commutateur (36) est impair.

5. Machine électrique selon la revendication 2 ou 4, **caractérisée en ce que** l'un des balais négatifs (B-) est décalé par rapport à l'un des balais positifs (B+) du triple de la division polaire (Pt) de la machine.

6. Machine électrique selon l'une des revendications précédentes, **caractérisée en ce que** les lamelles (L) du commutateur (16), décalées les unes par rapport aux autres de quatre divisions polaires (Pt), sont reliées les unes aux autres par les ponts de contact (K).

7. Machine électrique selon la revendication 1 ou 6, **caractérisée en ce que** les bobines (S) des dents polaires (Z) et les ponts de contact (K) sont formés d'un fil du bobinage (18) bobiné au moyen d'automates de bobinage.

8. Machine électrique selon la revendication 1, **caractérisée en ce que** dans le cas d'un stator (11) à huit pôles, l'induit de commutateur (13) est doté de onze dents polaires (Z) ou de onze rainures (N) ainsi que de vingt-deux lamelles (L).

9. Machine électrique selon la revendication 1, **caractérisée en ce que** dans le cas d'un stator (11) à huit pôles, l'induit de commutateur (13) est doté de neuf dents polaires (Z) ou rainures (N) et de dix-huit lamelles (L).

10. Machine électrique selon la revendication 1, **caractérisée en ce que** lorsque le stator (31) présente douze pôles, l'induit (33) du commutateur est doté de onze dents polaires (Z) ou rainures (N) et de trente-trois lamelles (L).
